# EUROPÄISCHE PATENTSCHRIFT

(11) **EP 1 341 157 B1**
(45) Veröffentlichungstag und Bekanntmachung des Hinweises auf die Patenterteilung: **08.11.2006**
(21) Anmeldenummer: 03002538.1
(22) Anmeldetag: 05.02.2003
(51) Int. Cl.: G10L 15/26, G10L 15/06, F24C 15/20

(54) **Sprachgesteuertes Elektrisches Haushaltsgerät**
Speech controlled electric household appliance
Appareil électroménager contrôlé par la parole

(30) Priorität: 27.02.2002 DE 10208466
(43) Veröffentlichungstag der Anmeldung: 03.09.2003
(73) Patentinhaber: BSH Bosch und Siemens Hausgeräte GmbH, 81739 München (DE)
(72) Erfinder: Maase, Jens, 93053 Regensburg (DE)

(56) Entgegenhaltungen:
- DE-A- 10 006 240
- US-B1- 6 233 556
- LEE C-H: "On stochastic feature and model compensation approaches to robust speech recognition" SPEECH COMMUNICATION, AMSTERDAM, NL, Bd. 25, Nr. 1-3, 1. August 1998 (1998-08-01), Seiten 29-47, XP004148064 ISSN: 0167-6393
- YIFAN GONG ET AL: "Implementing a high accuracy speaker-independent continuous speech recognizer on a fixed-point DSP" ICASSP 2000, Bd. 6, 5. Juni 2000 (2000-06-05), Seiten 3686-3689, XP010505698
- CHIANG T ED - EUROPEAN SPEECH COMMUNICATION ASSOCIATION (ESCA): "SPEECH RECOGNITION IN NOISE USING ON-LINE HMM ADAPTATION" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE : ESCA, FR, Bd. VOL. 3 OF 5, 22. September 1997 (1997-09-22), Seiten 1155-1158, XP001045023
- STEINBISS V ET AL: "The Philips research system for continuous-speech recognition" PHILIPS JOURNAL OF RESEARCH, ELSEVIER, AMSTERDAM, NL, Bd. 49, Nr. 4, 1995, Seiten 317-352, XP004000259 ISSN: 0165-5817

## Beschreibung

Die Erfindung bezieht sich auf ein elektrisches Haushaltgerät, insbesondere auf eine Dunstabzugshaube, mit einer ein Mikrofon und einem diesem nachgeordneten Spracherkenner aufweisenden Sprachbedieneinheit.

Aus der WO 01/59763 A1 sind bereits ein Elektrogerät mit einer Spracheingabeeinheit und ein Verfahren zur Spracheingabe bekannt. Das bekannte Gerät hat eine Spracheingabeeinheit und eine Sprachverarbeitungseinheit, die aus gesprochenen Eingabebefehlen erforderliche Steuersignale ableitet, um die Funktionen des Gerätes zu steuern. Bei diesem Gerät ist bereits vorgesehen, bei der Spracheingabe eine Korrektur von Störsignalen vorzunehmen. Dies wird bei dem bekannten Elektrogerät dadurch erreicht, dass eine Betriebsstatus-Erkennungseinheit vorgesehen ist, die den Betriebsstatus des Haushaltgerätes oder anderer Geräuschquellen erkennt und an die Sprachverarbeitungseinheit meldet. Diese nimmt eine Störgeräuschkorrektur nur dann vor, wenn eine Geräuschquelle eingeschaltet ist. Bei der Spracheingabe zur Steuerung eines Elektrogerätes wird der Betriebsstatus zumindest einer die Spracheingabe störenden Geräuschquelle abgefragt und eine Störgeräuschkorrektur durch die Sprachverarbeitungseinheit vorgenommen, wenn die Geräuschquelle eingeschaltet ist. Das bekannte Verfahren führt in all den Fällen zu einer Verbesserung der Spracherkennung, in denen das Sprachsignal gar nicht durch Störgeräusche belastet ist.

Es ist die Aufgabe der Erfindung, ein elektrisches Haushaltgerät der eingangs genannten Art derart zu verbessern, dass die Qualität der Spracherkennung gesteigert wird.

Erfindungsgemäß wird diese Aufgabe durch ein elektrisches Haushaltsgerät nach Anspruch 1 gelöst.

Das Ziel der Prüfung der akustischen Signale, die das Mikrofon oder ein anderer Signalwandler aufnimmt, oder die innerhalb der elektrischen Schaltung der Sprachbedieneinheit auf elektrischem Weg zu einem Spracherkenner gelangen, ist die Kompensation von Signalunterschieden aufgrund eines Vergleichs mit Referenzdaten. Die Referenzdaten sind entweder herstellerseitig in einem der Sprachbedieneinheit zugeordneten Datenspeicher abgelegt, oder sie werden später während der Benutzung bei einem Kunden gewonnen.

Das Sprachbediensystem ist abhängig von verschiedenen Einflussfaktoren in der Aufzeichnung und der Auswertung der akustischen Signale. Der Signalweg unterliegt stark schwankenden Einflussgrößen. Diese ändern sich einmal dadurch, dass die räumliche Anordnung des Haushaltgerätes innerhalb eines Raumes geändert wird oder dass sich durch eine Änderung innerhalb des Raums, in dem das Haushaltgerät aufgestellt ist, die Akustik des ganzen Raums verändert. Dies geschieht beispielsweise durch das Einbringen neuer Möbel in den Raum oder durch das Umstellen von Möbeln innerhalb des Raums. Andere Einflussgrößen sind beispielsweise die Mikronfonalterung, die Alterung elektrischer und/oder elektronischer Bauelemente der Sprachbedieneinheit oder die Verschmutzung des akustischen Eingangssystems, die die Spracherkennung beeinflussen. Erfindungsgemäß werden diese Einflüsse dadurch berücksichtigt, dass in dem Datenspeicher Referenzdaten abgelegt sind, mit denen die jeweiligen, von dem Mikrofon aufgenommenen Sprach-Daten verglichen werden, um dadurch entweder das Mikrofon, eine diesem zugeordnete elektronische Schaltung, beispielsweise elektrische Filter, oder den Spracherkenner selbst oder eine diesem zugeordnete elektronische Schaltung neu einzustellen bzw. zu kalibrieren.

Des weiteren wird die Aufgabe dadurch gelöst, dass die Sprach-Referenzdaten, die in dem Speicher als elektronische Daten vorhanden sind, einem Lautsprecher zugeführt werden, der aufgrund der elektronischen Daten akustische Signale erzeugt, die dann von dem Mikrofon aufgenommen werden. Die von dem Lautsprecher erzeugten Prüfsignale werden dann mit aktuell von dem Mikrofon aufgenommenen Sprach-Daten verglichen, um eine Kalibrierung durchzuführen. Die von dem Lautsprecher bzw. dem Schallgeber abgestrahlten Prüftöne werden nach dem Passieren des gesamten Signalweges und einer entsprechenden Umformung durch diesen aufgenommen, ausgewertet und mit den Sprach-Referenzdaten verglichen.

In einer bevorzugten Ausführungsform ist die Sprachbedieneinheit ein selbstlernendes System, in dem die Sprach-Referenzdaten während einer Lernphase erlernt werden. Dies hat den Vorteil, dass die Sprachbedieneinheit die Art der Intonation und der Sprechweise einer einzigen ausgewählten Person oder eines Kreises einer bestimmten Anzahl von ausgewählten Personen berücksichtigt, um daran angepasst eine Veränderung durch Alterung oder sonstige Einflüsse zu berücksichtigen.

Bevorzugt weist die Sprachbedieneinheit einen Mikrocontroller auf, der den Spracherkenner und das Mikrofon steuert. Der Mikrocontroller gibt an das Mikrofon bzw. den Spracherkenner Steuersignale, wenn diese jeweils neu kalibriert werden sollen.

Bevorzugt weist der Mikrocontroller einen Komparator auf, in dem von dem Mikrofon oder dem Spracherkenner übertragene Sprach-Daten mit den Sprach-Referenzdaten verglichen werden.

Bevorzugt weist das Haushaltgerät auch Anzeigemittel auf, in denen der Funktionszustand der Sprachbedieneinheit dargestellt wird. Dabei lässt sich anzeigen, ob die Sprachbedieneinheit nach ihrer erstmaligen Inbetriebnahme einen Lernprozess durchläuft, um Sprach-Referenzdaten zu gewinnen, oder ob der reguläre Betrieb besteht, bei dem aufgrund von einem Bediener vorgenommener Spracheingaben die Sprachbedieneinheit die Funktionsweise des Haushaltgeräts einstellt, steuert oder verändert, oder ob die Sprachbedieneinheit einen neuen Kalibriervorgang durchführt, der notwendig geworden ist, weil Änderungen in dem Raum stattgefunden haben oder weil die Sprachbedieneinheit eine Verschmutzung oder einen Alterungsprozess durchlaufen hat. Ebenso lässt sich anzeigen, wenn die Sprachbedieneinheit eine Kalibrierung nicht mehr vornehmen kann, weil bestimmte, für die Sprachbedieneinheit herstellerseitig vorgegebene Grenzwerte unterschritten werden, so dass der Kundendienst gerufen werden muss. Sowohl optische als auch akustische Anzeigemittel sind einsetzbar. Für den Fall, dass die Sprachbedieneinheit über einen Lautsprecher verfügt, gibt dieser dem Bediener akustische Signale, insbesondere gesprochene Worte als Information, etwa "Bitte Kundendienst rufen!".

Gemäß Patentanspruch 6 bezieht sich die Erfindung auf ein Verfahren zum Prüfen einer Sprachbedieneinheit in dem Haushaltgerät. Vorteilhafte Weiterbildungen ergeben sich aus den Unteransprüchen. Gemäß Patentanspruch 10 bezieht sich die Erfindung auf ein Verfahren zum Initialisieren einer Sprachbedieneinheit, wobei zunächst durch den Lautsprecher akustische Signale erzeugt werden, dass daraus durch das Mikrofon und den Spracherkenner elektronische Signale gewonnen werden, die mit den Sprach-Referenzdaten verglichen werden, die den akustischen Signalen des Lautsprechers zugrunde liegen, und dass aufgrund des Vergleichs das Mikrofon und/oder der Spracherkenner eingestellt werden.

Nachstehend wird die Erfindung in einem Ausführungsbeispiel näher erläutert. Es zeigen:
- Figur 1: eine Dunstabzugshaube in Verbindung mit einem Kochfeld in perspektivischer Anordnung,
- Figur 2: eine Sprachbedieneinheit in vereinfachter Darstellung in Form eines Blockdiagramms und
- Figur 3: ein Flussdiagramm mit dem Logikablauf in der Sprachbedieneinheit.

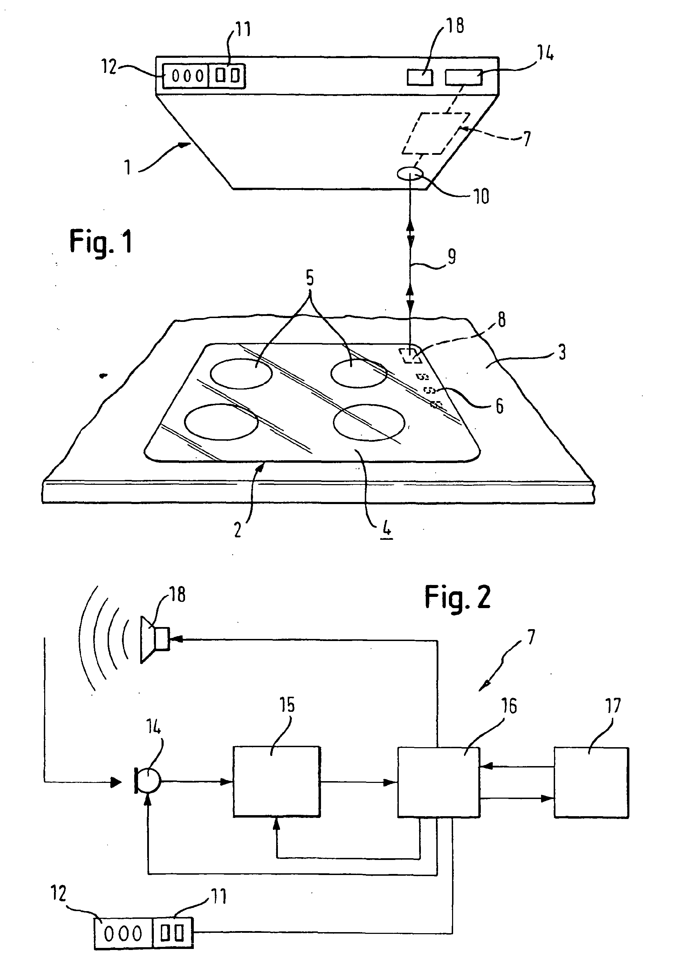

Eine Dunstabzugshaube 1 (Figur 1) ist oberhalb eines Kochfeldes 2 angeordnet. Das Kochfeld 2 ist in einem Ausschnitt einer Arbeitsplatte 3 montiert. Das Kochfeld 2 umfasst eine Kochfeldplatte 4, die beispielsweise aus Glaskeramik besteht und auf der verschiedene Kochzonen 5 markiert sind. Entsprechend den Eingaben über eine Bedien- und Anzeigeeinheit 6 des Kochfeldes 2 können von unterhalb der Kochfeldplatte 4 angeordnete Heizelemente über eine Steuereinheit auf den Kochzonen 5 abgestellte Kochgefäße beheizt werden. Die Bedien- und Anzeigeeinheit 6 ist als Zusatzfunktion zu einer Sprachbedieneinheit 7 vorhanden, über die durch Spracheingabe sämtliche Bedienfunktionen sowohl des Kochfeldes 2 als auch der Dunstabzugshaube 1 durchgeführt werden. Die Kommunikation zwischen der Dunstabzugshaube 1 und dem Kochfeld 2 wird gewährleistet durch eine Sende- und Empfangseinheit 8, die im Bereich der Kochfeldplatte 4 angeordnet ist und die über eine drahtlose Verbindung 9 oder eine drahtgebundene Verbindung mit einer zugeordneten Sende- und Empfangseinheit 10 der Dunstabzugshaube 1 kommuniziert. Auch die Dunstabzugshaube 1 ist mit einer Bedieneinheit 11 und einer Anzeigeeinheit 12 ausgestattet. Über die Bedieneinheit 11 können von Hand Funktionen der Dunstabzugshaube 1 eingegeben oder verändert werden.

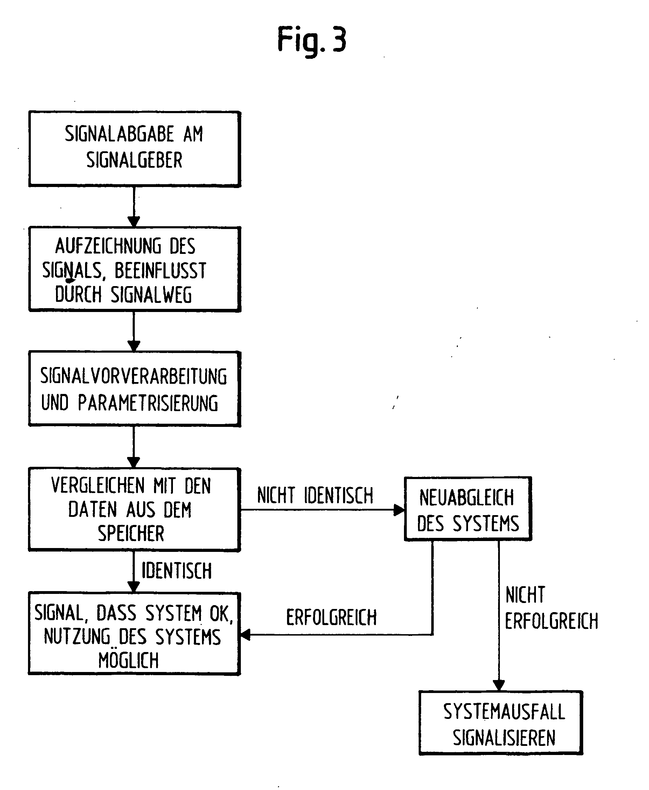

Die Sprachbedieneinheit 7 (Figur 2) umfasst ein Mikrofon 14 zur Aufnahme von Sprache aus dem Raum, in dem die Dunstabzugshaube 1 und das Kochfeld 2 angeordnet sind. Die von dem Mikrofon 14 aufgenommenen Sprachsignale werden in elektronische Signale umgewandelt und einem Spracherkenner 15 zugeführt. In dem Spracherkenner 15 werden aus den zugeführten Sprachsignalen verschiedene Parameter gewonnen, die beispielsweise den Lautstärkenpegel, den Frequenzgang des Systems, der Signallaufzeiten, usw. enthalten. Somit findet in dem Spracherkenner 15 eine Vorverarbeitung der Sprachdaten statt. Die Sprachdaten werden durch einen Mikrocontroller 16 mit in einem nicht-flüchtigen Speicher 17 abgelegten Sprach-Referenzdaten verglichen, die zu diesem Zweck aus dem Speicher 17 ausgelesen werden. Der Mikrocontroller 16 enthält somit einen Komparator, durch den die Vergleichsfunktion ausgeführt wird. Aufgrund des Vergleichs der Daten führt der Mikrocontroller 16 Einstellvorgänge an dem Mikrofon 14 und/oder dem Spracherkenner 15 oder an ihnen jeweils zugeordneten elektronischen Schaltungen durch, um die Aufnahmefähigkeit des Mikrofons 14 und des Spracherkenners 15 entsprechend den einmal gespeicherten Sprach-Referenzdaten zu optimieren.

Die Sprach-Referenzdaten sind entweder herstellerseitig in dem Speicher 17 abgespeichert, oder sie werden anhand von ebenfalls in dem Speicher 17 abgespeicherten Prüfsignal-Daten von einem Lautsprecher 18 generiert. Die Prüfsignale breiten sich in dem Raum aus und berücksichtigen dabei die spezifische Akustik des Raumes und werden anschließend über das Mikrofon 14 und den Spracherkenner 15 zu dem Mikrocontroller 16 übertragen, passieren also den gesamten Signalweg. Die somit wieder in elektronische Form umgewandelten aufgenommenen Signale lassen sich mit den Prüfsignalen aus dem Speicher 17, die dort in elektronischer Form vorhanden sind, in dem Mikrocontroller 16 vergleichen, und dieser nimmt dann, falls notwendig, entsprechende Einstellungen an dem Mikrofon 14 und/oder dem Spracherkenner 15 vor. Die verschiedenen Arbeitsschritte der Sprachbedieneinheit können durch die Anzeigeeinheit 12 angezeigt werden.

Der von dem Mikrocontroller 16 zu steuernde Prüfvorgang wird erstmalig vorzugsweise bei Aufstellung der Dunstabzugshaube 1 und des Kochfeldes 2 in einem Raum durchgeführt, was beispielsweise durch Tasteneingabe mittels der Bedieneinheit 11 durch einen Bediener initialisiert wird. Zur Wahl wird entweder auf in dem Speicher 17 abgespeicherte Referenzdaten zurückgegriffen, die herstellerseitig bereits vorhanden sind, oder der Bediener wird in den Prüfvorgang miteinbezogen, indem dieser aufgefordert wird, Sprachsignale abzugeben, die dann in dem Speicher 17 abgespeichert werden, so dass sie für spätere Prüfvorgänge der Sprachbedieneinheit 7 zur Verfügung stehen. Ein derartiger Prüfvorgang wird immer dann eingeleitet, wenn Grenzparameter, welche zu einer Beeinträchtigung der Leistungsfähigkeit der Sprachbedieneinheit 7 führen, überschritten werden. Dann muss das gesamte System neu abgeglichen werden, was in der oben beschriebenen Weise erfolgt. Falls die Parameter einen weiteren Grenzwert überschreiten, der ein noch niedrigeres Maß an Spracherkennung bezeichnet, ist dies ein Zeichen für einen bevorstehenden Ausfall der Sprachbedieneinheit 7, welcher sich in einer schlechteren Spracherkennung bemerkbar macht. Daher informieren entsprechende Signaleinrichtungen, entweder an der Anzeigeeinheit 12 durch optische Signale oder durch akustische Signale des Lautsprechers 18 den Benutzer über den Servicefall.

Es zeigt sich also, dass eine essentielle Abweichung der bei einem Prüfvorgang aufgenommenen Daten auf ein verändertes Gesamtsystem hinweist, welches einen Neuabgleich erforderlich macht. Dieser wird dann automatisch eingeleitet. Hierbei weist beispielsweise eine hörbare Tonfolge den Benutzer auf den Neuabgleich hin. Selbst, wenn nach dem Neuabgleich keine zu den Referenzdaten ähnliche Daten erzielt werden können, wird dieses als Fehler gespeichert und verschiedene Formen der Fehlermeldung und Signalisation geben dem Bediener bzw. dem Kundendienst an, welche Defekte an der Sprachbedieneinheit 7 aufgetreten sind. Im Fall von sicherheitsrelevanten Anwendungen wird die Sprachbedieneinheit 7 ganz abgeschaltet, um Fehleingaben über die Sprachbedieneinheit 7 zu verhindern. Es zeigt sich somit, dass über das erfindungsgemäße Verfahren zum Prüfen der Sprachbedieneinheit 7 eine Vielzahl von Einflussfaktoren, beispielsweise ein Defekt am Lautsprecher oder Schallgeber, eine geänderte Raumcharakteristik, eine Verschmutzung des Gitters des Mikrofons, eine Alterung des Mikrofons oder ein Fehler im elektronischen Eingangszweig der Sprachbedieneinheit 7 zu Veränderungen bei der Spracherfassung führen, die sämtlich durch die in dem Mikrocontroller 16 realisierte Vergleichsfunktion erfasst werden können, um daraus Konsequenzen für die Bedienung des Haushaltgerätes zu ziehen. Bei bekannten Systemen können derartige Veränderungen des Systems, insbesondere die Alterung oder Veränderung des Signalweges sowie die Alterung oder Verschmutzung des Systems nicht quantitativ erfasst werden. Dies könnte bei einem bekannten System dazu führen, den Kundendienst auch dann zu holen, wenn in Wirklichkeit kein Servicefall vorliegt. Dies würde zu zusätzlichen Kosten führen, die durch die Erfindung vermieden werden können.

Anhand eines Blockdiagramms (Figur 3) lässt sich der Logikablauf in der Sprachbedieneinheit 7 darstellen: Zuerst erfolgt eine Signalabgabe an einem Signalgeber, d.h. dem Lautsprecher 18. Dessen Signal wird durch den Signalweg beeinflusst und von dem Mikrofon 14 aufgenommen. Innerhalb des Spracherkenners 15 wird eine Signalvorverarbeitung und Parametrisierung vorgenommen. In dem Mikrocontroller 16 werden so nach die aufgenommenen Daten mit den Daten aus dem Speicher 17 verglichen. Wenn sie identisch sind, wird ein Signal von der Anzeigeeinheit 12 erzeugt, das dem Bediener kenntlich macht, dass das System okay ist und die Nutzung des Systems möglich ist. Falls der Vergleich zeigt, dass die Daten nicht identisch sind, wird das System neu abgeglichen. Falls der Neuabgleich wiederum erfolgreich ist, erfolgt dieselbe Anzeige wie bei Identität der Daten, nämlich, dass das System einwandfrei arbeitet. Falls der Neuabgleich des Systems jedoch nicht erfolgreich war, wird der Systemausfall durch die Anzeigeeinheit 12 signalisiert.

## Patentansprüche

1. Elektrisches Haushaltgerät, insbesondere Dunstabzugshaube (1), mit einer ein Mikrofon (14) und einen diesem nachgeordneten Spracherkenner (15) aufweisenden Sprachbedieneinheit (7), wobei die Sprachbedieneinheit (7) einen Datenspeicher (17) mit in diesem als elektronische Daten gespeicherten Sprach-Referenzdaten umfasst, **dadurch gekennzeichnet, dass** dem Haushaltgerät zusätzlich ein Lautsprecher (18) zugeordnet ist, durch den die Sprach-Referenzdaten als Prüfsignale aus elektronischen Daten erzeugbar sind, die in der Sprachbedieneinheit (7) auswertbar sind, und dass anhand eines Vergleichs zwischen den durch das Mikrofon (14) aufgenommenen Sprach-Daten und den Sprach-Referenzdaten die Sprachbedieneinheit (7) anhand des Auswertungsergebnisses kalibrierbar ist.

2. Haushaltgerät nach Anspruch 1, **dadurch gekennzeichnet, dass** die Sprachbedieneinheit (7) ein selbstlernendes System ist, durch das die Sprach-Referenzdaten während einer Lernphase erlernbar sind.

3. Haushaltgerät nach Anspruch 1 oder 2, **dadurch gekennzeichnet, dass** die Sprachbedieneinheit (7) einen Mikrocontroller (16) umfasst, durch den das Mikrofon (14) bzw. der Spracherkenner (15) steuerbar sind.

4. Haushaltgerät nach Anspruch 3, **dadurch gekennzeichnet, dass** der Mikrocontroller (16) einen Komparator umfasst, in dem von dem Mikrofon (14) oder dem Spracherkenner (15) aufgenommene Sprach-Daten mit den Sprach-Referenzdaten vergleichbar sind und dass aufgrund von von dem Komparator erzeugten Signalen der Spracherkenner (15) und/oder das Mikrofon (14) einstellbar ist.

5. Haushaltgerät nach einem der Ansprüche 1 bis 4, **dadurch gekennzeichnet, dass** der Funktionszustand der Sprachbedieneinheit (7) durch Anzeigemittel (12) darstellbar ist.

6. Verfahren zum Prüfen einer Sprachbedieneinheit (7) für ein elektrisches Haushaltgerät, insbesondere einer Dunstabzugshaube (1), nach einem der Ansprüche 1 bis 5, wobei Sprach-Referenzdaten des Datenspeichers (17) mit von dem Mikrofon (14) aufgenommenen Sprach-Daten verglichen werden, **dadurch gekennzeichnet, dass** durch den Lautsprecher (18) die Sprach-Referenzdaten als akustische Signale erzeugt werden und dass durch das Mikrofon (14) und den Spracherkenner (15) daraus elektronische Signale gewonnen werden, die mit den Sprach-Referenzdaten verglichen werden.

7. Verfahren nach Anspruch 6, **dadurch gekennzeichnet, dass** aufgrund des Vergleichs der Sprach-Daten mit den Sprach-Referenzdaten Anzeigen an dem Haushaltgerät erzeugt werden, die den Zustand der Sprachbedieneinheit (7) wiedergeben.

8. Verfahren nach Anspruch 6 oder 7, **dadurch gekennzeichnet, dass** bei Überschreiten von ersten Grenzparametern, die einer nicht mehr ordnungsgemäßen Qualität der Spracherfassung entsprechen, die Sprachbedieneinheit (7) neu kalibriert wird.

9. Verfahren nach Anspruch 6, **dadurch gekennzeichnet, dass** bei Überschreiten von zweiten Grenzparametern, bei denen die ordnungsgemäße Funktion der Sprachbedieneinheit (7) auch durch neue Kalibrierung nicht wiederhergestellt werden kann, der Defekt oder der Servicefall angezeigt wird.

10. Verfahren zum Initialisieren einer Sprachbedieneinheit (7) für ein elektrisches Haushaltgerät nach einem der Ansprüche 1 bis 5, wobei das Verfahren **dadurch gekennzeichnet, ist dass** aus den Sprach-Referenzdaten des Datenspeichers (17) durch den Lautsprecher (18) akustische Signale erzeugt werden und dass von dem Mikrofon (14) und dem Spracherkenner (15) daraus elektronische Signale gewonnen werden, die mit den Sprach-Referenzdaten verglichen werden und dass aufgrund des Vergleichs das Mikrofon (14) und/oder der Spracherkenner (15) eingestellt wird.

11. Verfahren nach Anspruch 10, **dadurch gekennzeichnet, dass** der Initialisiervorgang einem Benutzer durch eine Anzeigeeinheit (12) optisch und/oder akustisch angezeigt wird.

## Claims

1. Electric domestic appliance, particularly fume extractor hood (1), with a speech control unit (7) having a microphone (14) and a speech recognition device (15) arranged downstream thereof, wherein the speech control unit (7) comprises a data memory (17) with speech reference data stored therein as electronic data, **characterised in that** additionally associated with the domestic appliance is a loudspeaker (18) by which the speech reference data can be generated as check signals from electronic data, which can be evaluated in the speech control unit (7), and that the speech control unit (7) can be calibrated by way of the comparison between the speech data received by the microphone (14) and the speech reference data on the basis of the evaluation result.

2. Domestic appliance according to claim 1, **characterised in that** the speech control unit (7) is a self-learning system by which the speech reference data can be learnt during a learning phase.

3. Domestic appliance according to claim 1 or 2, **characterised in that** the speech control unit (7) comprises a microcontroller (16) by which the microphone (14) and the speech recognition device (15) are controllable.

4. Domestic appliance according to claim 3, **characterised in that** the microcontroller (16) comprises a comparator in which speech data received by the microphone (14) or the speech recognition device (15) can be compared with the speech reference data and that the speech recognition device (15) and/or the microphone (14) is or are settable by way of signals produced by the comparator.

5. Domestic appliance according to one of claims 1 to 4, **characterised in that** the functional state of the speech control unit (7) can be represented by indicating means (12).

6. Method for checking a speech control unit (7) for an electric domestic appliance, particularly a fume extractor hood (1), according to one of claims 1 to 5, wherein speech reference data of the data memory (17) are compared with speech data received by the microphone (14), **characterised in that** the speech reference data are generated as acoustic signals by the loudspeaker (18) and that electronic signals, which are compared with the speech reference data, are obtained therefrom by the microphone (14) and the speech recognition device (15).

7. Method according to claim 6, **characterised in that** displays reproducing the state of the speech control unit (7) are generated at the domestic appliance on the basis of the comparison of the speech data with the speech reference data.

8. Method according to claim 6 or 7, **characterised in that** the speech control unit (7) is recalibrated in the case of exceeding of the first limit parameters corresponding with a quality, which is no longer proper, of the speech detection.

9. Method according to claim 6, **characterised in that** the defect or service case is displayed in the case of exceeding two limit parameters in which the proper function of the speech control unit (7) can no longer be reproduced even by recalibration.

10. Method for initialising a speech control unit (7) for an electric domestic appliance according to one of claims 1 to 5, wherein the method is **characterised in that** acoustic signals are generated by the loudspeaker (18) from the speech reference data of the data memory (17) and that electronic signals, which are compared with the speech reference data, are obtained therefrom by the microphone (14) and the speech recognition device (15) and that the microphone (14) and/or the speech recognition device (16) is or are adjusted on the basis of the comparison.

11. Method according to claim 10, **characterised in that** the initialising process is optically and/or acoustically displayed to a user by a display unit (12).

## Revendications

1. Appareil ménager électrique, en particulier hotte aspirante (1), comprenant une unité de commande vocale (7) présentant un microphone (14) et un identificateur vocal (15) placé en aval de celui-ci, l'unité de commande vocale (7) comprenant une mémoire de données (17) avec des données de référence vocales mémorisées sous la forme de données électroniques, **caractérisé en ce que** à l'appareil ménager est attribué en supplément un haut-parleur (18), par lequel les données de référence vocales peuvent être générées sous la forme de signaux de test à partir de données électroniques qui peuvent être analysées dans l'unité de commande vocale (7) et **en ce que**, à l'aide d'une comparaison entre les données vocales enregistrées par le microphone (14) et les données de référence vocales, la commande vocale (7) peut être étalonnée à l'aide du résultat de l'analyse.

2. Appareil ménager selon la revendication 1, **caractérisé en ce que** l'unité de commande vocale (7) est un système d'auto-apprentissage, par lequel les données de référence vocales peuvent être apprises pendant une phase d'apprentissage.

3. Appareil ménager selon la revendication 1 ou 2, **caractérisé en ce que** l'unité de commande vocale (7) comprend un microcontrôleur (16), par lequel un microphone (14) resp. l'identificateur vocal (15) peuvent être contrôlés.

4. Appareil ménager selon la revendication 3, **caractérisé en ce que** le microcontrôleur (16) comprend un comparateur dans lequel des données vocales enregistrées par le microphone (14) ou l'identificateur vocal (15) peuvent être comparées avec les données de référence vocales et **en ce que** l'identificateur vocal (15) et/ou le microphone (14) peuvent être réglés sur la base de signaux générés par le comparateur.

5. Appareil ménager selon l'une quelconque des revendications 1 à 4, **caractérisé en ce que** l'état fonctionnel de l'unité de commande vocale (7) peut être présenté par des moyens d'affichage (12).

6. Procédé pour tester l'unité de commande vocale (7) pour un appareil ménager électrique, en particulier une hotte aspirante (1), selon l'une quelconque des revendications 1 à 5, des données de référence vocales de la mémoire de données (17) étant comparées avec les données vocales enregistrées par le microphone (14), **caractérisé en ce que** les données de référence vocales sont générées sous la forme de signaux acoustiques par le haut-parleur (18) et **en ce qu'**on obtient par le microphone (14) et l'identificateur vocal (15) des signaux électroniques qui sont comparés avec les données de référence vocales.

7. Procédé selon la revendication 6, **caractérisé en ce que**, sur la base de la comparaison des données vocales avec les données de référence vocales, on génère des affichages sur l'appareil ménager qui reproduisent l'état de l'unité de commande vocale (7).

8. Procédé selon la revendication 6 ou 7, **caractérisé en ce que**, en cas de dépassement de premiers paramètres limites qui correspondent à une qualité de commande vocale qui n'est plus correcte, l'unité de commande vocale (7) est ré-étalonnée.

9. Procédé selon la revendication 6, **caractérisé en ce que**, en cas de dépassement de seconds paramètres limites, avec lesquels la fonction correcte de l'unité de commande vocale (7) ne peut pas être rétablie par un nouvel étalonnage, la défaillance ou le problème d'entretien est affiché.

10. Procédé pour initialiser une unité de commande vocale (7) pour un appareil ménager électrique selon l'une quelconque des revendications 1 à 5, le procédé étant **caractérisé en ce que**, à partir des données de référence vocales de la mémoire de données (17), des signaux acoustiques sont générés par le haut-parleur (18) et **en ce que**, par le microphone (14) et l'identificateur vocal (15), on obtient à partir de là des signaux électroniques qui sont comparés avec les données de référence vocales et **en ce que** le microphone (14) et/ou l'identificateur vocal (15) est/sont réglé(s) sur la base de la comparaison.

11. Procédé selon la revendication 10, **caractérisé en ce que** l'opération d'initialisation est affichée visuellement et/ou de façon acoustique pour un utilisateur par une unité d'affichage (12).
